# EUROPEAN PATENT APPLICATION

(11) **EP 3 413 291 A1**
(43) Date of publication of application: **12.12.2018**
(21) Application number: 17896170.2
(22) Date of filing: 13.03.2017
(51) Int. Cl.: G09B 19/00

(54) **UNPLUGGED CODING BLOCKS**

(30) Priority: 10.02.2017 KR 20170018638
(71) Applicant: CNR Tech. Co., Ltd, Anyang-si, Gyeonggi-do 14055 (KR)
(72) Inventor: HAN, Deok Soo, Anyang-si Gyeonggi-do 14049 (KR); JEONG, Yun Ok, Hwaseong-si Gyeonggi-do 18428 (KR)
(74) Representative: Hylarides, Paul Jacques
(86) International application number: PCT/KR2017/002652
(87) International publication number: WO 2018/147499

(57) **Abstract**

The present invention relates to a hand-manipulating coding block. An exemplary embodiment of the present invention provides a hand-manipulating coding block including: at least one real coding block configured to have a unique ID, to have at least one connector, and to generate an actual code; at least one numbering block configured to have a unique ID, to be connected to the real coding block, and to input a numerical value; at least one variable block configured to have a unique ID, to be connected to the real coding block, and to input a variable value; and a main block configured to be connected to the real coding block to sequentially execute codes corresponding to IDs received from the real coding blocks. According to the exemplary embodiment of the present invention, it is possible to improve linking with actual coding statements as well as to induce interests and learn coding concepts, by providing a block having structure similar to that of the actual coding statements (control statements, variables, events, debugging, etc.).

## Description

### TECHNICAL FIELD

The present invention relates to a coding block. More particularly, the present invention relates to a hand-manipulating coding block that may learn hand-coding without a computer.

### BACKGROUND

Generally, it is necessary to educate a programming language such as C language to develop various programs used in a computer or a smartphone, thus education is also needed on algorithms that can logically make a method of using a programming language and coding an application with a particular foundation and rules.

The education on algorithms is a process of learning a kind of logical language and learning how to pick up and connect something.

Therefore, it is important to understand basic concepts of the logical language (for example, how a loop works, how to determine, how to calculate, how to get information that a computer provides, how to make a computer work, etc.) and to feel a creative experience and a sense of accomplishment regarding what a user has created.

The algorithms can naturally enhance children's logical thinking and help them to think creatively.

However, it is rather difficult to educate children in an application language because the application language is mostly configured of a foreign language. In addition, error messages that are repeatedly activated due to simple mistakes that may occur in a process of creating a program, such as a combination of a colon and a semicolon, or omissions, cause children to lose interest in the algorithm education and cause the algorithm education to be abandoned.

Further, conventional software education focuses on the use of software, thus the software education does not help children write algorithms for their own software.

Therefore, there is a need for a device that can educate children easily and interestingly.

Accordingly, a coding technique using a block is being developed.

However, since a conventional product associated with the coding technique is focused on interest induction and coding concept training, it only provides an instruction-oriented API block. In addition, since the conventional product has a form in which an instruction block is placed on an instruction board, the instruction board is physically restricted such that arrangement of the instruction block is limited. In attempting to overcome this problem, there is a problem in that it is necessary to continuously provide different function instruction API blocks.

Meanwhile, in coding education, debugging is very effective in finding problems or solving the problems in existing algorithms, or in developing more efficient algorithms. However, it is impossible to learn through debugging due to a limitation of an instruction API block in a conventional unplugged-based teaching tool.

### DISCLOSURE

### TECHNICAL PROBLEM

The present invention has been made in an effort to provide a hand-manipulating coding block that may improve linking with actual coding statements as well as inducing interest and helping to learn coding concepts, by providing a block having a structure that is similar to that of actual coding statements (control statements, variables, events, debugging, etc.).

### TECHNICAL SOLUTION

In addition, the present invention has been made in an effort to provide a hand-manipulating coding block that may provide a flexible instruction block layout and minimize an instruction API block because it is based on actual coding statements although it is an unplugged teaching tool.

Further, the present invention has been made in an effort to provide a hand-manipulating coding block that may provide a puzzle-like mission board to solve various problems in various ways, so that children can use their creativity to perform a new mission (a new line of flow, an obstacle layout, etc.) and thus learn various solutions.

Moreover, the present invention has been made in an effort to provide a hand-manipulating coding block that may perform debugging by attaching an LED and the like to a coding block.

An exemplary embodiment of the present invention provides a hand-manipulating coding block, including:
at least one real coding block configured to have a unique ID, to have at least one connector, and to generate an actual code;
at least one numbering block configured to have a unique ID, to be connected to the real coding block, and to input a numerical value;
at least one variable block configured to have a unique ID, to be connected to the real coding block, and to input a variable value; and
a main block configured to be connected to the real coding block to sequentially execute codes corresponding to IDs received from the real coding blocks.

The hand-manipulating coding block may further include an execution device executing a predetermined operation according to a control signal of the main block.

The execution device may be a drone, a robot, a smartphone, or a display.

The real coding block may include:
a coding memory having a unique ID;
a first coding connector connected to the real coding block positioned at an upper portion thereof for communicating;
a second coding connector connected to the real coding block positioned at a lower portion thereof for communicating;
at least one third coding connector connected to the numbering block;
at least one fourth coding connector connected to the variable block;
a fifth coding connector connected to the real coding block positioned at a central portion for communicating; and
a coding controller controlling the first coding connector, the fifth coding connector, the third coding connector, and the fourth coding connector so that their inputs and their IDs are outputted to the second coding connector.

The real coding block may include an LED part displaying an operation state.

The numbering block may include:
a button part for selecting a number;
a numeric connector connected to the real coding block;
a numeric display part displaying a number selected in the button part; and
a numeric controller that displays the number selected in the button part on the numeric display part and transmits it to the real coding block through the numeric connector.

The variable block may include:
a variable memory having a unique ID;
a variable connector connected to the real coding block; and
a variable controller transmitting the ID stored in the variable memory to the real coding block through the variable connector.

The main block may include:
a main memory storing instructions and variables corresponding to the unique IDs of the real coding block and the variable block;
at least one main connector connected to the real coding block; and
a main controller executing an input value inputted from the real coding block with reference to the main memory.

The main block may include a communication part for communicating with an external execution device, and may output a control signal for executing the execution device through the communication part.

The numbering block or the variable block may be formed with resisters to output a resistance value, and the main block may recognize a number or a variable corresponding to a voltage value.

### ADVANTAGEOUS EFFECTS

According to the exemplary embodiment of the present invention, it is possible to improve linking with actual coding statements as well as inducing interest and helping to learn coding concepts, by providing a block having structure similar to that of the actual coding statements (control statements, variables, events, debugging, etc.).

According to the exemplary embodiment of the present invention, it is possible to provide a flexible instruction block layout and minimize an instruction API block because it is based on actual coding statements although it is an unplugged teaching tool.

According to the exemplary embodiment of the present invention, it is possible to provide a puzzle-like mission board to solve various problems in various ways, so that children can use their creativity to perform a new mission (a new line of flow, an obstacle layout, etc.) and thus learn various solutions.

According to the exemplary embodiment of the present invention, it is possible to perform debugging by attaching an LED and the like to a coding block.

### DECSRIPTION OF THE DRAWINGS

FIG. 1 illustrates a schematic diagram of a hand-manipulating coding block according to an exemplary embodiment of the present invention.
FIG. 2 illustrates a schematic diagram of a real coding block of FIG. 1.
FIG. 3 illustrates a schematic diagram of a numbering block of FIG. 1.
FIG. 4 illustrates a schematic diagram of a variable block of FIG. 1.
FIG. 5 illustrates a schematic diagram of a main block of FIG. 1.
FIG. 6 illustrates an example of a board.
FIG. 7 to FIG. 15 are drawings for explaining various exemplary embodiments of the present invention.

### MODE FOR INVENTION

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Throughout the specification and claims, unless explicitly described to the contrary, the word "comprise" and variations such as "comprises" or "comprising" will be understood to imply the inclusion of stated elements but not the exclusion of any other elements.

A server described below may be a device that includes a processor and a memory such as a RAM or a ROM, and executes software.

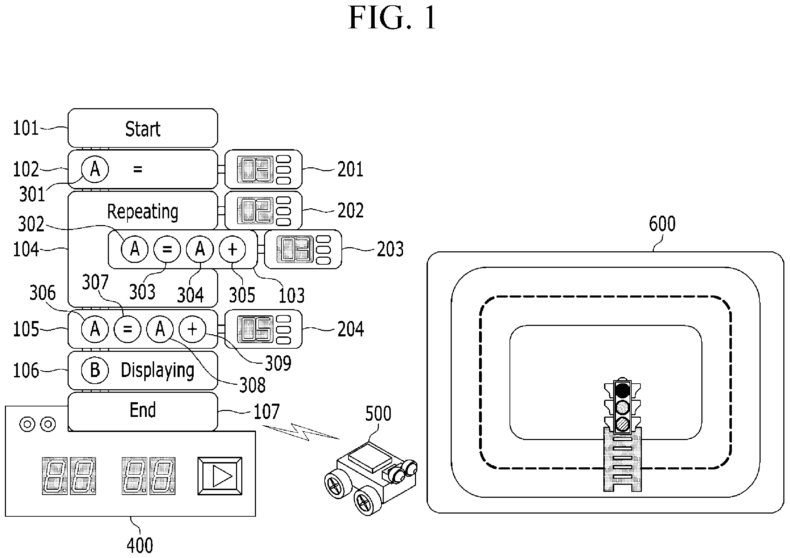

FIG. 1 illustrates a schematic diagram of a hand-manipulating coding block according to an exemplary embodiment of the present invention.

Referring to FIG. 1, a hand-manipulating coding block according to an exemplary embodiment of the present invention includes:
at least one real coding block 101, 102, 103, 104, 105, 106, or 107 configured to have a unique ID, to have at least one connector, and to generate an actual code;
at least one numbering block 201, 202, 203, or 204 configured to have a unique ID, to be connected to the real coding block 101, 102, 103, 104, 105, 106, or 107 or a variable block, and to input a numerical value;
at least one variable block 301, 302, 303, 304, 305, 306, 307, 308, 309, or 310 configured to have a unique ID, to be connected to the real coding block 101, 102, 103, 104, 105, 106, or 107 or the numbering block, and to input a variable value;
a main block 400 configured to be connected to the real coding block 101, 102, 103, 104, 105, 106, or 107 to sequentially execute codes corresponding to IDs received from the real coding blocks 101, 102, 103, 104, 105, 106, and 107; and
an execution device 500 configured to execute a predetermined operation depending on a control signal of the main block.

The real coding blocks 101, 102, 103, 104, 105, and 106 output inputs of a first coding connector 110, a fifth coding connector 150, a third coding connector 130, and a fourth coding connector 140 and its own ID to a second coding connector 120 to transmit information to the remaining real coding blocks 102, 103, 104, 105, 106, and 107 at a lower stage thereof. That is, the information received by the real coding blocks 101, 102, 103, 104, 105, and 106 at an upper stage and the information received by the variable blocks 301, 302, 303, 304, 305, 306, 307, 308, 309, and 310 and the numbering blocks 201, 202, 203, and 204 are first transmitted to the real coding blocks 102, 103, 104, 105, 106, and 107 at the lower stage, and their own IDs are also transmitted to the real coding blocks 102, 103, 104, 105, 106, and 107.

The execution device 500 may be one of a drone, a robot, and a display, and may execute a predetermined operation on an execution board.

When the execution device 500 is a robot, the robot performs operations such as running, left-turning, stopping, and starting on a board 600 as needed.

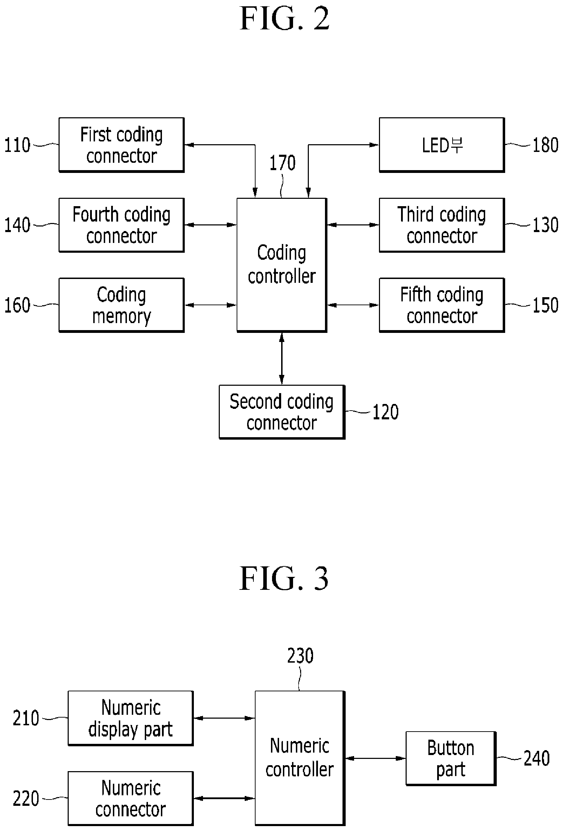

FIG. 2 illustrates a schematic diagram of a real coding block of FIG. 1.

Each of the real coding blocks 101, 102, 103, 104, 105, 106, and 107 includes:
a coding memory 160 having a unique ID;
the first coding connector 110 connected to the real coding block 101, 102, 103, 104, 105, or 106 positioned at an upper portion for communicating;
the second coding connector 120 connected to the real coding block 102, 103, 104, 105, 106, or 107 positioned at a lower portion for communicating;
at least one third coding connector 130 connected to the numbering block 201, 202, 203, or 204;
at least one fourth coding connector 140 connected to the variable block 301, 302, 303, 304, 305, 306, 307, 308, 309, or 310;
the fifth coding connector 150 connected to the real coding block 103 positioned at a central portion for communicating;
a coding controller 170 controlling the first coding connector 110, the fifth coding connector 150, the third coding connector 130, and the fourth coding connector 140 so that their inputs and their IDs are outputted to the second coding connector 120; and
an LED part 180 displaying an operation state.

The number of the first to fifth coding connectors 110 to 150 is at least one, and the number of the real coding blocks 101, 102, 103, 104, 105, 106, and 107 may vary depending on a purpose of use.

FIG. 3 illustrates a schematic diagram of a numbering block of FIG. 1.

Each of the numbering blocks 201, 202, 203, and 204 includes:
a button part 240 for selecting a number;
a numeric connector 220 connected to the real coding block 101, 102, 103, 104, 105, 106, or 107 or the variable block 301, 302, 303, 304, 305, 306, 307, 308, 309, or 310;
a numeric display part 210 displaying a number selected in the button part 240; and
a numeric controller 230 that displays the number selected in the button part 240 on the numeric display part 210 and transmits it to the real coding block 101, 102, 103, 104, 105, 106, or 107 or the variable block 301, 302, 303, 304, 305, 306, 307, 308, 309, or 310 through the numeric connector 220.

The number displayed on each of the numbering blocks 201, 202, 203, and 204 is increased or decreased as a user presses the button part 240, and each of the numbering blocks 201, 202, 203, and 204 displays the number selected by the numeric controller 230 on the numeric display part 210 and transmits it the real coding block 101, 102, 103, 104, 105, 106, or 107 or the variable block 301, 302, 303, 304, 305, 306, 307, 308, 309, or 310 through the numeric connector 220.

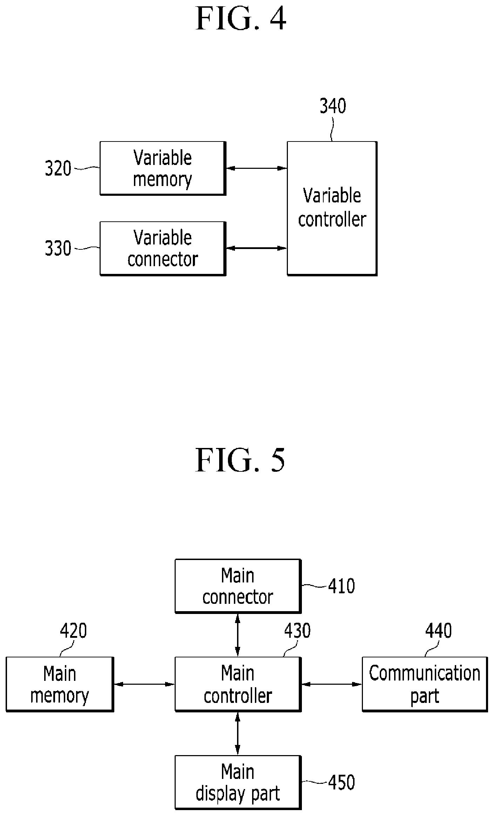

FIG. 4 illustrates a schematic diagram of a variable block of FIG. 1.

Each of the variable blocks 301, 302, 303, 304, 305, 306, 307, 308, 309, and 310 includes:
a variable memory 320 having a unique ID;
a variable connector 330 connected to the real coding block 101, 102, 103, 104, 105, 106, or 107; and
a variable controller 340 transmitting the ID stored in the variable memory to the real coding block 101, 102, 103, 104, 105, 106, or 107 through the variable connector 330.

When the variable block 301, 302, 303, 304, 305, 306, 307, 308, 309, or 310 is connected to the real coding block 101, 102, 103, 104, 105, 106, or 107, the variable controller 340 transmits the ID stored in the variable memory 320 to the real coding block 101, 102, 103, 104, 105, 106, or 107 through the variable connector 330.

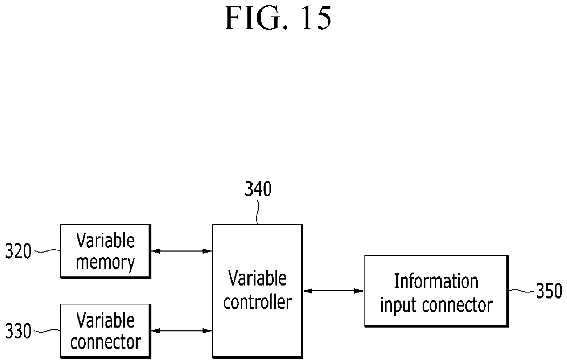

The variable block may be modified as shown in FIG. 15.

Referring to FIG. 15, each of the variable blocks 301, 302, 303, 304, 305, 306, 307, 308, 309, and 310 includes:
the variable memory 320 having a unique ID;
the variable connector 330 connected to the real coding block 101, 102, 103, 104, 105, 106, or 107; and
the variable controller 340 transmitting the ID stored in the variable memory 320 to the real coding block 101, 102, 103, 104, 105, 106, or 107 or the variable block 301, 302, 303, 304, 305, 306, 307, 308, 309, or 310 through the variable connector 330.

When the variable block 301, 302, 303, 304, 305, 306, 307, 308, 309, or 310 is connected to the real coding block 101, 102, 103, 104, 105, 106, or 107 or the variable block, the variable controller 340 transmits the ID stored in the variable memory 320 to the real coding block 101, 102, 103, 104, 105, 106, or 107 through the variable connector 330.

In addition, when one side of the variable block 301, 302, 303, 304, 305, 306, 307, 308, 309, or 310 is connected to the real coding block 101, 102, 103, 104, 105, 106, or 107 or the variable block and another side thereof is connected to the variable block or the numbering block, the variable controller 340 transmits the ID stored in the variable memory 320 to the real coding block 101, 102, 103, 104, 105, 106, or 107 or the variable block through the variable connector 330, and then transmits information inputted from the numbering block or the variable block (a variable block connected to a separate information input connector 350) to the real coding block or the variable block (a variable block connected to the variable connector 330) closer to the real coding block than itself, through the variable connector 330.

FIG. 5 illustrates a schematic diagram of a main block of FIG. 1.

The main block 400 includes:
a main memory 420 storing instructions and variables corresponding to the unique IDs of the real coding block 101, 102, 103, 104, 105, 106, or 107 and the variable block 301, 302, 303, 304, 305, 306, 307, 308, 309, or 310;
at least one main connector 410 connected to the real coding block 107; and
a main controller 430 executing an input value inputted from the real coding block 107 with reference to the main memory 410.

The main block includes a communication part 440 for communicating with an external execution device.

The main controller 430 sequentially executes input values inputted from the real coding blocks 101, 102, 103, 104, 105, 106, and 107 with reference to the main memory 420.

In addition, the main controller 430 outputs a control signal for executing the execution device 500 through the communication part 440.

A main display part 450 displaying information is further included, and the main display part 450 may be two seven-segment elements or a liquid crystal display.

As necessary, the numbering block 201, 202, 203, or 204 or the variable block 301, 302, 303, 304, 305, 306, 307, 308, 309, or 310 may be formed with resisters to output a resistance value, and the main block 400 may recognize a number or a variable corresponding to a voltage value.

Hereinafter, operations of the hand-manipulating coding block according to the exemplary embodiment of the present invention having the configuration described above will be described.

A user is instructed to do coding by an educator, or combines various blocks to do coding he wants.

Referring to FIG. 1, according to a coupled structure, seven real coding blocks 101, 102, 103, 104, 105, 106, and 107 and the main block 400 are coupled, and the numbering blocks 201, 202, 203, and 204 or the variable blocks 301, 302, 303, 304, 305, 306, 307, 308, 309, and 310 are coupled to the real coding blocks 101, 102, 103, 104, 105, 106, and 107.

An operation of a coding result of such a structure is as follows.

First, each of the seven real coding blocks 101, 102, 103, 104, 105, 106, and 107 outputs the inputs of the first coding connector 110, the fifth coding connector 150, the third coding connector 130, and the fourth coding connector 140 and its own ID to the second coding connector 120 to transmit information to the remaining real coding blocks 102, 103, 104, 105, 106, and 107 at the lower stage. That is, the information received from the real coding blocks 101, 102, 103, 104, 105, and 106 and the information received from the variable blocks 301, 302, 303, 304, 305, 306, 307, 308, 309, and 310 and from the numbering blocks 201, 202, 203, and 204 are first transmitted to the real coding blocks 102, 103, 104, 105, 106, and 107 at the lower stage, and its own ID is transmitted to the real coding blocks 102, 103, 104, 105, 106, and 107 at the lower stage.

Since all of the real coding blocks 101, 102, 103, 104, 105, 106, and 107 perform the above-described operation, the main block 400 sequentially receives information from the uppermost real coding block 101 to the real coding block 107 coupled thereto.

Then, the main controller 430 sequentially executes input values of the information inputted from the real coding blocks 101, 102, 103, 104, 105, 106, and 107 with reference to the main memory 420.

First, the first real coding block 101 is executed. The first real coding block 101 is a block for notifying starting, and the blocks after the first real coding block 101 execute instructions.

Next, the second real coding block 102 is executed, in which instruction A=3 is executed. After the main controller 430 receives an ID corresponding to a variable, it matches the ID with a variable of the main memory 420. Then, an equal sign, which is an instruction corresponding to the ID of the real coding block 102, is corresponded thereto, and the number 3 is corresponded thereto. For this, a variable, an instruction, and the like corresponding to the ID are previously stored in the main memory 420.

Hereinafter, an instruction execution process of a corresponding block is executed by the constituent elements in each block in the same manner as the above-described process, so it will be briefly described for convenience of description.

The third real coding block 103 is executed. In this case, since the coding block coupled next to the upper stage is first executed, the third block becomes A=A+3.

Therefore, A=6.

In this case, since the instruction of the fourth real coding block 104 is repeated two times, A=6+3=9.

Next, since the instruction of the fifth real coding block 105 is B=A+5, B=14.

Subsequently, since the instruction of the sixth real coding block 106 is a "B showing", the main controller 430 displays 14 (which is a result value) on the main display 450 of the main block 400. In some cases, for example, in a case of "A and B showing", A=9 and B=14 may be displayed on respective sides of the main display part.

Since the instruction of the seventh real coding block 107 is "end", no instruction is executed.

In these processes, when an instruction is "display result" on a separate display which corresponds to the execution device 500, the result may be displayed on the display.

When an instruction is one "allowing the robot as the execution device 500 to move along a rectangular course", the control signal of the main controller 430 is transmitted to the execution robot through the communication part 440. In this case, it is preferable for the communication part 440 to be wireless.

Then, the execution robot moves along the course on the execution board 600.

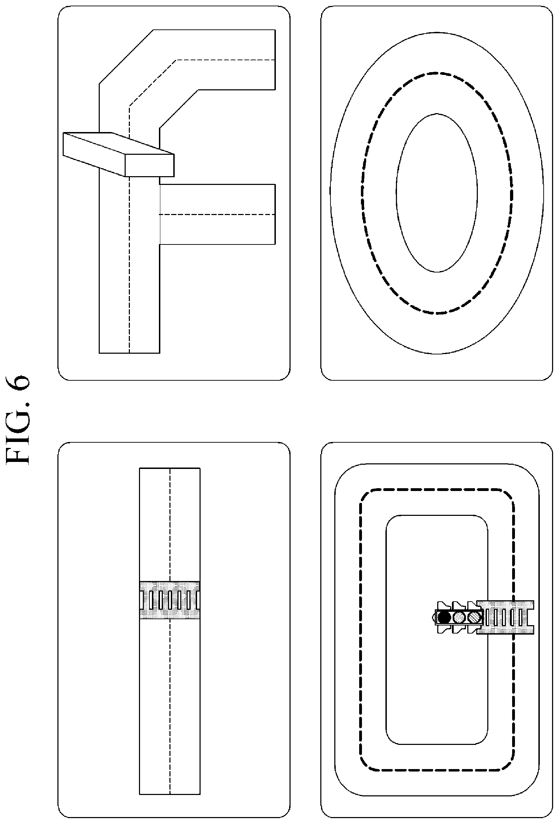

The execution board 600 may have various forms, and these examples are shown in FIG. 6.

Meanwhile, the main controller 430 may output a control signal so that the LED part 180 of a corresponding real coding block lights up according to an instruction execution order, and may display the real coding blocks 101, 102, 103, 104, 105, 106, and 107 corresponding to the instruction currently being executed.

Thus, the learning effect may be further increased.

In addition, various real coding blocks 101, 102, 103, 104, 105, 106, and 107 may exist, and various additions, modifications, and deletions are possible as needed.

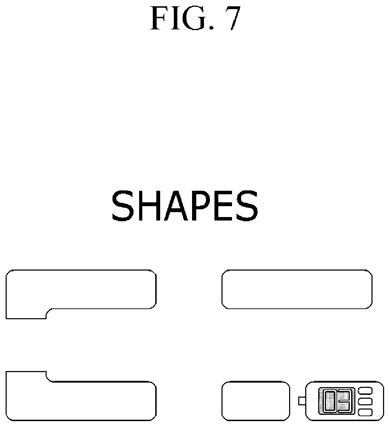

Referring to FIG. 7, a shape of the real coding block may also be varied.

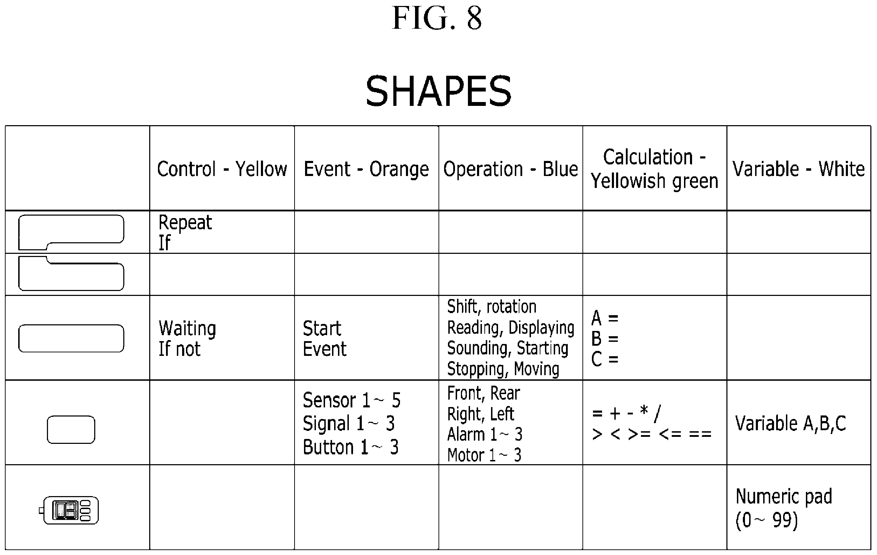

Further, a shape and a color may be diversified as shown in FIG. 8.

Referring to FIG. 8, the function of the same shape of real coding block may be changed according to its color.

For example, when an orange real coding block for informing a start event becomes yellow, its function may become a function such as "waiting" or 'if not'. In addition, when the real coding block becomes blue, its function may become a function such as "shifting", "rotating", "reading", "displaying", "sounding", "starting", "stopping", "moving", or the like.

In addition, even a real coding block of the same shape may perform different functions according to its color, and by displaying it at the outside of the real coding block, children may easily perform coding.

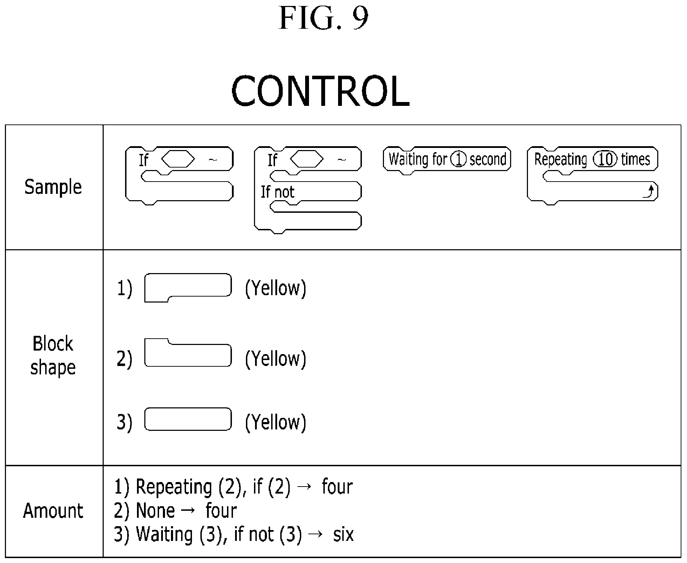

FIG. 9 illustrates an example in which a real coding block may be used together with a numbering block or variable block and may perform controlling.

Referring to FIG. 9, "if ∼, waiting for 1 second", "repeating 10 times", or the like of the real coding block may be executed as a control function together with the numbering block and the variable block.

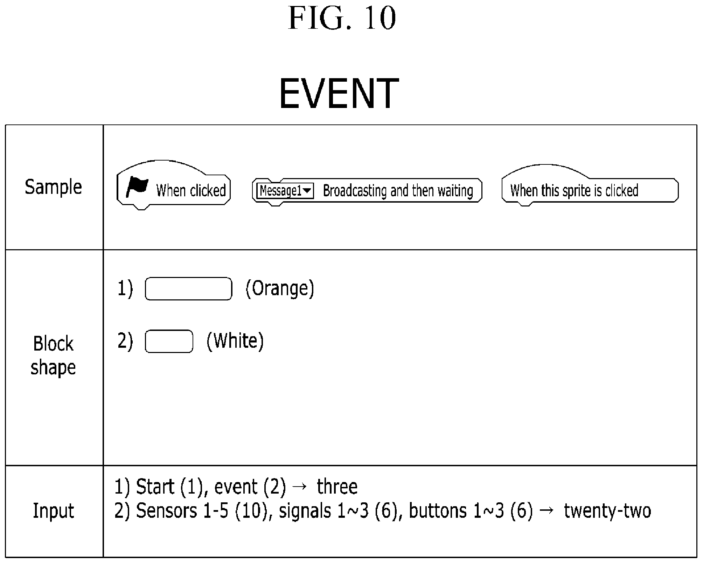

FIG. 10 illustrates an example of an event.

Referring to FIG. 10, an event such as "when clicked, broadcasting and then waiting, when this sprite is clicked" may be implemented by the real coding block.

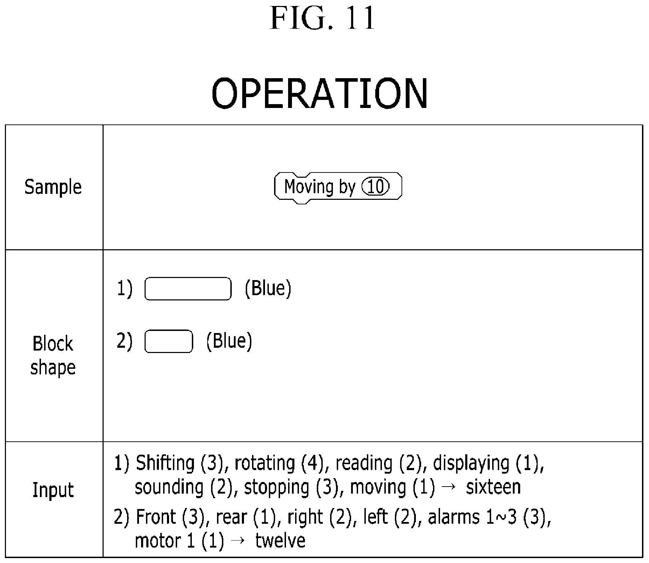

FIG. 11 illustrates an example of a real coding block representing an operation.

Referring to FIG. 11, the real coding block performing an operation of "moving by 10" or the like may be performed.

In addition, in a case of calculation, a calculation such as 10 addition or the like can be performed as in an operation.

The exemplary embodiment of FIG. 1 may be modified in various ways, and various coding may be performed to implement other operations.

An exemplary variation will be described as follows.

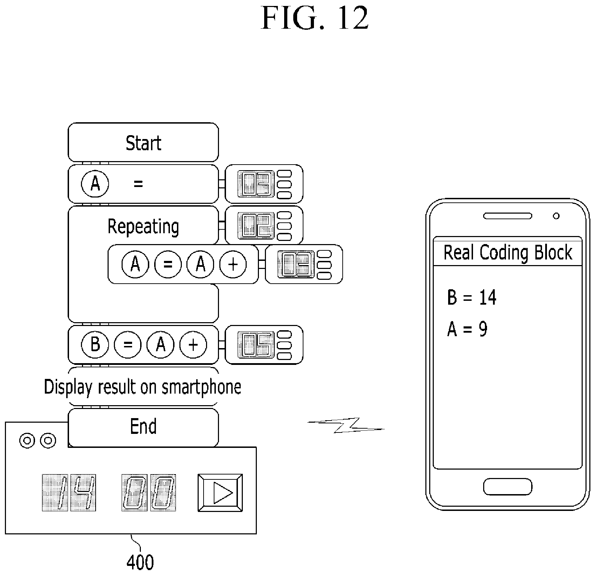

The exemplary variation of FIG. 12 is similar to the exemplary embodiment of FIG. 1, but there is a difference only in that a result of the exemplary variation of FIG. 12 is displayed on a smartphone.

Therefore, only the real coding block that displays the result on the smartphone is different, and the remaining blocks are the same.

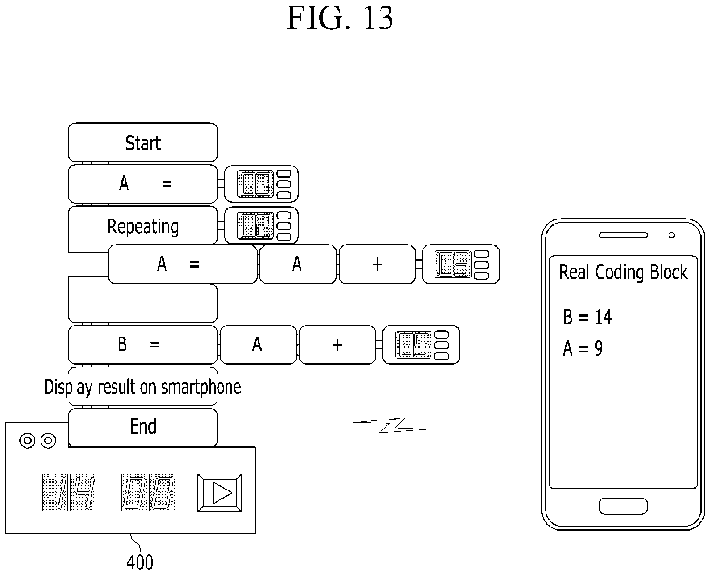

FIG. 13 illustrates an exemplary variation allowing a robot to be moved.

Referring to FIG. 13, after an operation is started, the main controller outputs a control signal to start the robot.

Then, the main controller outputs a control signal to cause the robot to move by 1, and when a value of a sensor 1 is larger than 50, the main controller stops the robot for 1 second.

Then, the robot moves until the number of repeats is 5, and when the value of the sensor 1 is larger than 50, the operation in which the robot is stopped for one second is repeated.

When the repeat operation is completed, the robot is stopped.

The exemplary embodiment of coding for controlling the operation of the robot may be variously modified.

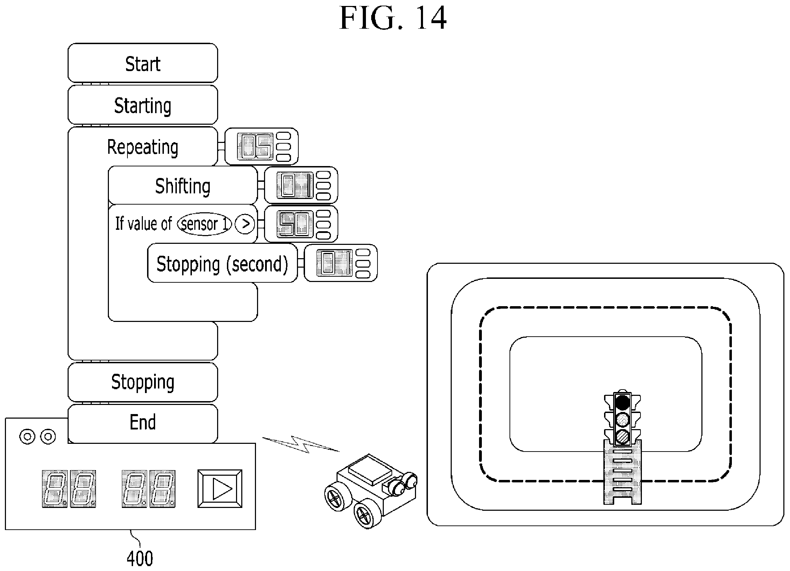

Meanwhile, the form in which the variable block is combined with the real coding block may be modified in various ways. As shown in FIG. 14, the variable block may be connected to a side of the real coding block, and the numbering block may be coupled to a side of the variable block.

In this case, when the variable blocks 301, 302, 303, 304, 305, 306, 307, 308, 309, and 310 are connected to the real coding blocks 101, 102, 103, 104, 105, 106, and 107, the variable controller 340 transmits the ID stored in the variable memory 320 to the real coding blocks 101, 102, 103, 104, 105, 106, and 107 through the variable connector 330, and then it transmits information inputted from another variable block or numbering block coupled thereto.

In addition, a separate coupling connector (not shown) may be additionally provided for coupling with another variable block or numbering block.

Further, when a variable block is combined with variable blocks disposed at opposite sides thereof, the variable block may include two separate connectors, and it may transmit information not to the real coding block, but to another variable block by using the variable connector 330 as needed.

Even in this case, the variable block firstly transmits the ID stored in the variable memory 320 to the variable block close to the real coding block through the variable connector 330, and then it transmits information inputted from another variable block or numbering block coupled thereto.

That is, referring to FIG. 14, the main block recognizes a coupling of "variable block A=", "variable block A", "variable block +", and "numbering block 3" as A=A+3.

According to the exemplary embodiment of the present invention, it is possible to improve linking with actual coding statements as well as inducing interest and helping to learn coding concepts, by providing a block having a structure similar to that of the actual coding statements (control statements, variables, events, debugging, etc.).

In addition, according to the exemplary embodiment of the present invention, it is possible to provide a flexible instruction block layout and minimize an instruction API block because it is based on actual coding statements although it is an unplugged teaching tool.

Further, according to the exemplary embodiment of the present invention, it is possible to provide a puzzle-like mission board to solve various problems in various ways, so that children can use their creativity to perform a new mission (a new line of flow, an obstacle layout, etc.) and thus learn various solutions.

Moreover, according to the exemplary embodiment of the present invention, it is possible to perform debugging by attaching an LED and the like to a coding block.

The exemplary embodiments of the present invention described above are not implemented only through a system and a method, but, on the contrary, are enabled to be implemented through a program which realizes functions corresponding to configuration of the exemplary embodiments of the present invention or through a recording medium at which the program is recorded. Accordingly, those skilled in the art may easily implement the exemplary embodiments of the present invention with reference to the above-mentioned description of the exemplary embodiments.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A hand-manipulating coding block, comprising:
at least one real coding block configured to have a unique ID, to have at least one connector, and to generate an actual code;
at least one numbering block configured to have a unique ID, to be connected to the real coding block, and to input a numerical value;
at least one variable block configured to have a unique ID, to be connected to the real coding block, and to input a variable value; and
a main block configured to be connected to the real coding block to sequentially execute codes corresponding to IDs received from the real coding blocks.

2. The hand-manipulating coding block of claim 1, wherein
the real coding block includes:
a coding memory having a unique ID;
a first coding connector connected to the real coding block positioned at an upper portion thereof for communicating;
a second coding connector connected to the real coding block positioned at a lower portion thereof for communicating;
at least one third coding connector connected to the numbering block;
at least one fourth coding connector connected to the variable block;
a fifth coding connector connected to the real coding block positioned at a central portion for communicating; and
a coding controller controlling the first coding connector, the fifth coding connector, the third coding connector, and the fourth coding connector so that their inputs and their IDs are outputted to the second coding connector.

3. The hand-manipulating coding block of claim 2, wherein
the numbering block includes:
a button part for selecting a number;
a numeric connector connected to the real coding block;
a numeric display part displaying a number selected in the button part; and
a numeric controller that displays the number selected in the button part on the numeric display part and transmits it to the real coding block through the numeric connector.

4. The hand-manipulating coding block of claim 3, wherein
the variable block includes:
a variable memory having a unique ID;
a variable connector connected to the real coding block; and
a variable controller transmitting the ID stored in the variable memory to the real coding block through the variable connector.

5. The hand-manipulating coding block of claim 4, wherein
the main block includes:
a main memory storing instructions and variables corresponding to the unique IDs of the real coding block and the variable block;
at least one main connector connected to the real coding block; and
a main controller executing an input value inputted from the real coding block with reference to the main memory.
